# EUROPEAN PATENT APPLICATION

(11) **EP 1 391 439 A2**
(43) Date of publication of application: **25.02.2004**
(21) Application number: 03010403.8
(22) Date of filing: 08.05.2003
(51) Int. Cl.: C03C 25/10, G02B 6/16, G02B 6/44

(54) **Methods and apparatus for coloring optical fibers during draw**

(30) Priority: 22.08.2002 US 226363
(71) Applicant: FITEL USA CORPORATION (a Delaware Corporation), Norcross, Georgia 30071 (US)
(72) Inventor: Xiong, Shunhe, Alpharetta, Georgia 30022 (US); Zhou, Zhi, Lawrenceville, Georgia 30043 (US); Turnipseed, John Michael, Lilburn, Georgia 30047 (US)
(74) Representative: Schoppe, Fritz, Dipl.-Ing.

(57) **Abstract**

The present invention provides coating methods for use in the manufacture of coated optical fibers. The coating methods of the present invention coat an optical fiber (12) with a primary coating material (34) that has a non-reactive colorant. A secondary coating material (36) is applied over the primary coating material. The primary coating material may either be cured prior to application of the secondary coating material or both the primary and secondary coating materials may be cured at the same time to create primary and secondary coating layers over the optical fiber. In one embodiment, the secondary layer is formed of a substantially transparent material, visibly exposing the colored primary coating layer for inspection and/or measurement (24).In this process, there is a first coating system (20a) and curing stage (26a) for applying and curing a primary layer and a second coating system (20b) and curing stage (26a) located after the first coating system and curing stage for applying and curing a secondary layer. The coating method may be used in a "wet on wet" or "wet on dry" manufacturing process.

## Description

### BACKGROUND OF THE INVENTION

### 1. Field of the Invention

This invention relates to optical fibers, and in particular to coated optical fibers.

### 2. Description of Related Art.

Optical fibers are generally coated with one or more layers of a polymeric coating material. These coatings help protect the optical fiber from mechanical damage, contamination and improve handling and optical fiber performance. The coating of optical fibers is well known in the art. See, for example, U.S. Patent No. 4,474,830, issued on October 2, 1984, and U.S. Patent No. 5,104,433, issued on April 14, 1992. Generally, optical fibers will have two coating layers: 1) the inner layer or the layer closest to the optical fiber is known as the primary layer, and 2) the second layer that covers the primary layer is known as the secondary layer.

Optical fibers are readily bent when subjected to mechanical stresses, such as those encountered during placement in a cable or when the cabled fiber is exposed to varying temperature environments or mechanical handling. If the stresses placed on the fiber result in bending distortion of the fiber axis, with periodic components typically ranging from the micron to the centimeter range, light propagating in the fiber core may escape therefrom. These transmitted power losses, termed microbending losses, may be very large. Accordingly, the fiber must be isolated from stresses that cause microbending. The properties of the fiber coating layers play a major role in providing this isolation. The modulus of the primary layer should be effective in reducing the stress transmitted to the glass by an external lateral force, thus reducing microbending of the glass. Primary coating materials have been characterized by an equilibrium modulus of elasticity in the range of about 50 psi to 200 psi. Equilibrium modulus may be defined as the final modulus that a cross-linked material will reach in time or at high temperatures. This modulus is chosen so that the primary coating achieves its principal purpose i.e., the reduction and uniform distribution, of stress supplied to the fiber. Through this reduction and distribution, losses due to microbending are substantially reduced.

The secondary layer typically comprises a relatively high modulus material and is applied over the primary layer. The secondary layer is usually of a higher modulus material to provide abrasion resistance and low friction for the coated fiber. The dual coating materials serve to cushion the optical fiber by way of the primary layer and to distribute the imposed forces by way of the secondary layer, so as to isolate the optical fiber from bending moments.

Identification of optical fibers is facilitated by color-coding the individual optical fibers. This may be accomplished by the optical fiber either having a separate outermost colored ink layer, a secondary layer colored through the addition of pigment or dye to the secondary layer, or compounds that are reactive to radiant energy may be added to the primary layer for coloring purposes. See, for example, U.S. Patent No. 6,014,488 issued on January 11, 2000, and PCT Application WO 0109053, published February 8, 2001 (the "'053 application"). The '053 application describes a radiation-curable fiber optic coating composition to be used as a primary coating material. Such composition, however, contains a coloring agent that is capable of imparting a color to the primary coating only upon exposure to actinic radiation. Exposure to actinic radiation is also required to cure the material.

Application of the coatings to the optical fiber may occur, for example, through processes known as the wet on dry process or the wet on wet process. In the wet on dry process, the primary layer of coating material, in liquid form, is applied to the optical fiber. The coated optical fiber is then passed through a curing stage whereby the liquid primary coating material is exposed to radiant energy to cure (and harden) the primary coating layer. The secondary layer is then applied in liquid form over the cured primary coating layer of the optical fiber. The coated optical fiber is once again passed through a curing stage where the secondary coating material is exposed to radiant energy in order to cure (and harden) the secondary layer. This second stage of curing may also further cure the primary coating layer of coating material.

In the wet on wet process, the primary coating material is applied in liquid form, followed closely by application of the secondary coating material, also in liquid form. There is no intervening curing stage between the application of the primary coating material and the application of the secondary coating material. The primary coating layer and the secondary coating layer are formed as the primary coating material and the secondary coating material are cured simultaneously, after their application to the optical fiber. In both processes, wet on dry or wet on wet, an outer ink layer used for color-coding may be applied over the secondary layer. This ink layer may also require curing.

It is to be recognized that the wet on dry process requires two curing stages and, quite possibly, a third stage for curing of an ink layer. This disadvantageously results in additional steps, devices and time in the manufacturing process. Further, an outer ink layer may be susceptible to delamination or flaking if the adhesion to the substrate secondary coating is not controlled optimally. The wet on wet process resolves many of these issues, particularly if a colorant is included in the secondary layer. However, the addition of the colorant to the secondary layer may prevent complete curing of the primary layer and also may preclude measurement of the outer diameter of the primary layer ("POD") during the manufacturing process. Real-time POD measurement can be used to monitor and adjust the manufacturing process and control the quality of the optical fiber as it is being manufactured.

Prior attempts have been made at coloring the primary layer of the optical fiber so that POD measurements can be made. However, these previous attempts use specialized reactive materials that only change the color of the primary layer after the reactive material has been exposed to radiant energy to produce a color. This method has several potential problems. First, the primary layer is not colored until after the coating has been cured. As such, POD measurements cannot be taken dynamically as the optical fiber is coated. Furthermore, the reactive colorants used to color the primary layer may be less vivid making it harder to discern the primary layer from the secondary layer.

POD measurements can be made dynamically with the '053 system; all it requires is that the sensor be placed at the exit of the curing lamp housings, as opposed to directly after the coating applicator, which might be convenient for a non-reactive colorant system.

Therefore, a need exists for an optical fiber with a primary layer colored with a non-reactive composition and a method of coloring the primary layer of an optical fiber with a non-reactive composition. Furthermore, a need exists for a method of coloring the primary layer of an optical fiber with a non-reactive composition in a wet on wet and wet on dry manufacturing process that allows the real-time measurement of POD.

### BRIEF SUMMARY OF THE INVENTION

The present invention overcomes many of the deficiencies in the known prior art by providing a primary coating material for an optical fiber that utilizes non-reactive colorants to form a colored primary layer that can be used for identification of a coated optical fiber with such a colored primary layer and a substantially transparent secondary layer.

The present invention provides a colored primary coating material that utilizes non-reactive colorants such as, for example, pigment, soluble dye, or a combination of pigment and soluble dye. A coated optical fiber that utilizes such a primary coating material and a substantially transparent secondary layer is disclosed. The coated optical fiber may be readily identified by the color of the colored primary layer that is visible through a substantially transparent secondary layer. Further disclosed, is a method of manufacturing a coated optical fiber having a colored primary layer and a substantially transparent secondary layer and a method of measuring the outer diameter of the colored primary layer of such a coated optical fiber, either during the manufacturing process or afterward.

Therefore, it is an aspect of the present invention to provide a primary layer coating material for an optical fiber comprised of a polymeric base and a non-reactive colorant. In this aspect of the present invention, the primary coating layer is colored by the non-reactive colorant independent of exposure to radiant energy.

It is a further aspect of the present invention to provide a coated optical fiber with a colored primary layer comprised of an optical fiber with an outer circumference and a length, a primary coating material containing a non-reactive colorant, and a secondary coating material; wherein the primary coating material coats the outer circumference of the optical fiber along the length thereby creating an outer circumference of the primary coating material along the length and the secondary coating material coats the outer circumference of the primary coating material along the length and the primary coating material and the secondary coating material are cured by exposure to radiant energy to form the colored primary layer and a secondary layer.

It is a further aspect of the present invention to provide a method of manufacturing a coated optical fiber with a colored primary layer and a substantially transparent secondary layer.

It is yet a further aspect of the present invention to provide a method for measuring an outer diameter of a colored primary layer of a coated optical fiber having a substantially transparent secondary layer.

Other objects, features and advantages of the present invention will become apparent upon reading the following detailed description of the preferred embodiment of the invention when taken in conjunction with the drawings and the appended claims.

### BRIEF DESCRIPTION OF THE SEVERAL VIEWS OF THE DRAWING(S)

Having thus described the invention in general terms, reference will now be made to the accompanying drawings, which are not necessarily drawn to scale, and wherein:
FIG. 1 is an overall perspective view of a portion of an exemplary manufacturing line for forming optical fiber using a wet on wet process in which the coating system of the present invention can be used and optical fiber according to the present invention can be produced;
FIG. 2 is a cross-sectional view of an exemplary optical fiber according to one embodiment of the present invention having two layers of coating materials, a primary coating material and a secondary coating material, comprising a coating system applied to the optical fiber;
FIG. 3 is an overall perspective view of a portion of an exemplary manufacturing line for forming optical fiber using a wet on dry process in which the coating system of the present invention can be used and optical fiber according to the present invention can be produced;
FIG. 4 is a perspective view of an optical fiber cable according to one embodiment of the present invention; and
FIG. 5 is a perspective view of an optical fiber ribbon according to one embodiment of the present invention.

### DETAILED DESCRIPTION OF THE INVENTION

The present inventions now will be described more fully hereinafter with reference to the accompanying drawings, in which some, but not all embodiments of the invention are shown. Indeed, these inventions may be embodied in many different forms and should not be construed as limited to the embodiments set forth herein; rather, these embodiments are provided so that this disclosure will satisfy applicable legal requirements. Like numbers refer to like elements throughout.

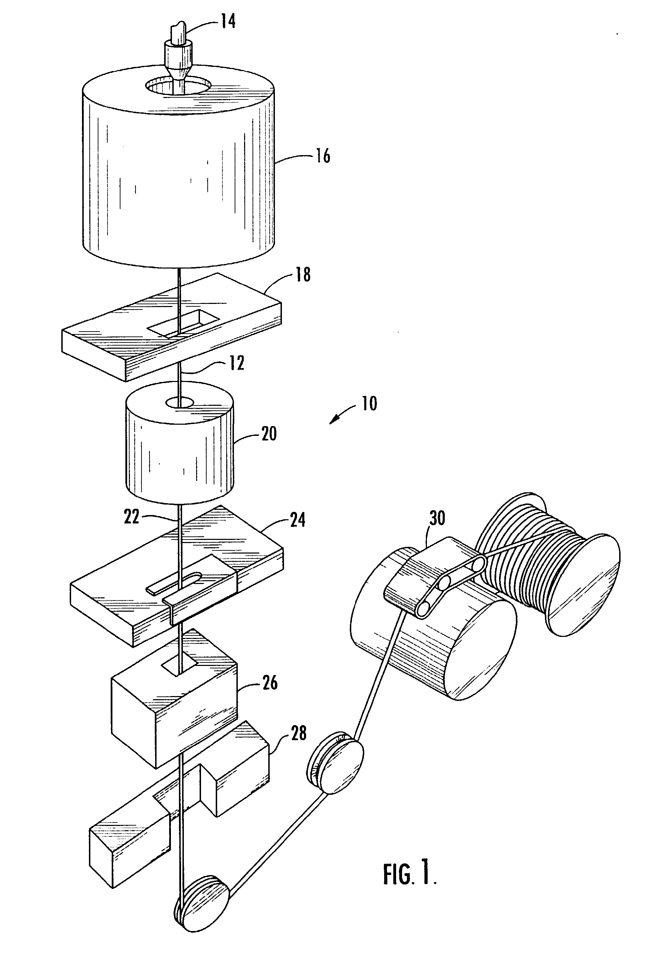

FIG. 1 illustrates an exemplary apparatus **10** for manufacturing optical fibers in which the systems and methods of the present invention may be implemented and coated optical fibers according to the present invention may be manufactured thereby. This is just one example of an optical fiber manufacturing system in which the methods for coating optical fibers according to the present invention may be implemented. In general, the systems and methods of the present invention can be used in any optical fiber manufacturing process that provides a coating on the optical fiber. Further, the coating methods of the present invention can be used in both a wet on wet and a wet on dry coating system.

The apparatus **10** of FIG. 1 is used to draw an optical fiber **12** in accordance with methods of this invention from a specifically prepared cylindrical preform **14** and then to coat the optical fiber. The optical fiber **12** is formed by locally and symmetrically heating the preform **14** to a temperature of about 2000 degree C. As the preform **14** is fed into and through a furnace **16**, optical fiber **12** is drawn from the molten material.

As can be seen in FIG. 1, the draw system includes the furnace **16** wherein the preform **14** is drawn down to optical fiber size, after which the optical fiber **12** is pulled from the heat zone. The diameter of the optical fiber **12,** which is measured by a measurement device **18** at a point below the furnace **16**, becomes an input into a control system, not shown. Within the control system, the measured diameter is compared to a desired diameter value, and an output signal is generated to adjust the draw speed, such that the fiber diameter approaches the desired diameter value.

After the diameter of the optical fiber **12** is measured, a protective coating system is applied by one or more apparatus **20** to provide a coated optical fiber **22.** One method of applying dual layers of coating materials to a moving optical fiber is disclosed in U.S. Pat. No. 4,474,830 which issued on Oct. 2, 1984, in the name of C. R. Taylor and which is incorporated herein by reference and is referred to herein as a "wet on wet" system. Another system for applying dual coatings on drawn optical fibers is disclosed in U.S. Pat. No. 4,913,859, which issued on April 3, 1990, in the names of B. J. Overton and Carl R. Taylor and is also incorporated herein by reference.

After the coating is applied, the coated optical fiber **22** is passed through a concentricity gauge **24**, one or more radiant energy devices **26** for treating the coating material to cure the coating material, and one or more devices **28** for measuring certain diameters of the coated fiber. The optical fiber is then moved through a capstan **30** and is spooled for testing and storage prior to subsequent operations or sale of the optical fiber.

The coating of optical fibers helps maintain the intrinsically high strength of an optical fiber. The preservation of the intrinsically high strength of optical fibers is important during their ribboning, jacketing, connectorization, cabling, and during their service life.

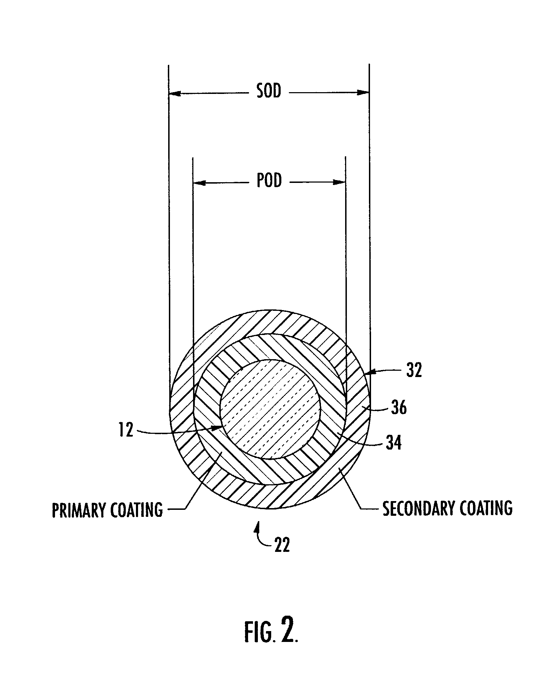

FIG. 2 illustrates a typical coated optical fiber formed by the apparatus **10** in cross-section. In this figure, a coating method embodied in apparatus **20** in FIG. 1 applies two layers of polymeric materials to the optical fiber **12**, after it has been drawn from the preform **14.** An inner layer **34** is referred to as the primary layer and comprises a cured primary coating material, and an outer layer **36**, which is referred to as the secondary layer, comprises a cured secondary coating material.

As discussed later below, the selection of the primary and secondary coating materials and their respective thickness define several of the characteristics of the coated optical fiber. In particular, thickness may affect the durability and flexibility of the coated optical fiber. Thus, in the manufacturing process, it is important to measure and regulate the thickness of these coatings. Typically, the primary and the secondary coating layers each have a thickness of about 30 micrometers, but can be any desired thickness depending on the desired characteristics of the coated optical fiber. The thickness of the coating materials can be regulated either by varying the speed that the fiber is drawn or by varying the amount of coating applied to the optical fiber. Measuring the thickness of the coatings dynamically during the manufacturing process, however, can be problematic.

In many instances an optical measurement device is used to measure the diameter of the optical fiber after application of the coatings. Optical measurement is difficult with many optical fibers manufactured using conventional coating systems. For example, in the prior art, in a wet on wet process, the diameter of the optical fiber **12** with only the primary coating material thereon cannot typically be measured after the application of the secondary coating material and the curing of the two layers. This is generally for at least one of two reasons. If the secondary coating material is colored, optical measurement of the outer diameter of the combination of optical fiber **12** and the primary coating material **34** (the "primary outer diameter" or the "POD") is difficult or not possible, depending on the opacity of the colored material. Alternatively, if both the primary and the secondary layers are transparent, it may be optically impossible to distinguish between the primary and secondary layers after curing to allow for measurement of the POD.

In the wet on dry process, the primary coating layer is typically cured and measured prior to application of the secondary coating layer. In this process, the POD is typically easier to measure because the secondary coating layer is not yet present. However, this requires that a measurement device be placed in the process after the primary layer is applied to measure POD, and a second measurement device be placed in the process after the secondary coating is applied to measure SOD.

The coating methods of the present invention eliminate the need for a measurement of the POD after the primary coating layer is applied and a second measurement of the secondary outer diameter ("SOD") after the secondary layer has been applied. According to embodiments of the present invention, both the POD and SOD of an optical fiber can be measured after both coatings have been applied. For example, in one embodiment of the present invention, the optical fiber will have a colored primary layer and a substantially transparent secondary layer, thereby allowing measurement of the both POD and SOD after both coats have been applied. The POD may be measured with an optical measurement device, and the SOD may be measured with an optical or mechanical measurement device. It may also be possible for the same optical measurement device to measure both POD and SOD either concurrently or sequentially.

Importantly, the present invention provides systems and methods for applying a primary and secondary coating layer on an optical fiber that allows for relatively easy measurement of the POD after the second coating layer has been applied. With regard to FIG. 1, the coating method of the present invention may be embodied in the apparatus **20.** The coating method of the present invention applies a primary layer of coating material to the optical fiber that comprises a polymeric base and a non-reactive colorant. The non-reactive colorant alters the color of the primary coating material. The coating system further applies a second coating material to create a secondary layer. In some embodiments, the second coating material is substantially transparent to thereby allow visual access to the primary coating layer. This, in turn, allows for inspection of the outer diameter of the primary coating layer, either visually or with a measurement device. As such, the systems and methods of the present invention allow the POD of an optical fiber to be measured with conventional optical measuring devices, even after the secondary coating material has been applied and the primary coating material and the secondary coating material have been cured. In this regard, conventional optical measuring devices can be used to measure the diameter of the colored primary layer, (POD), to a substantial degree of accuracy.

The systems and methods of the present invention also provide additional advantages. Specifically, in one wet on wet system a primary coating layer is used that includes a reactive colorant. The primary coating layer is not colored until it is cured, at which time the reactive colorant reacts with radiant energy to color the primary coating layer. In this instance, POD measurement cannot be performed until after the primary coating layer is cured . This is not a concern in the present invention. Specifically, because the primary coating layer is pre-colored with the non-reactive colorant, the primary coating layer is colored independent of curing. As such, the POD can be measured prior to curing.

Further, problems may also exist with vividness of primary layers colored by using reactive colorant. In some instances, the reactive coolant when irradiated does not color the primary layer with substantial vividness for subsequent optical measurement and/or visual inspection. This problem is exacerbated by the fact that the effects of the colorant can only be evaluated after the coating has cured. The coating methods of the present invention and coated optical fiber produced thereby alleviate this problem. Specifically, the non-reactive colorant used by the present invention immediately colors the primary layer, thereby allowing observation of the effects of coloration of the primary layer by the non-reactive colorant prior to curing.

A colored primary coating material also allows the measurement of the outer diameter of the SOD with conventional measurement devices such as, for example, the measurement device **28** of FIG. 1, because the colored primary layer can be visually /optically delineated from the secondary coating layer. Therefore, both the POD and SOD of a coated optical fiber with a colored primary coating material may be measured after both the primary coating layer and the secondary coating layer have been applied.

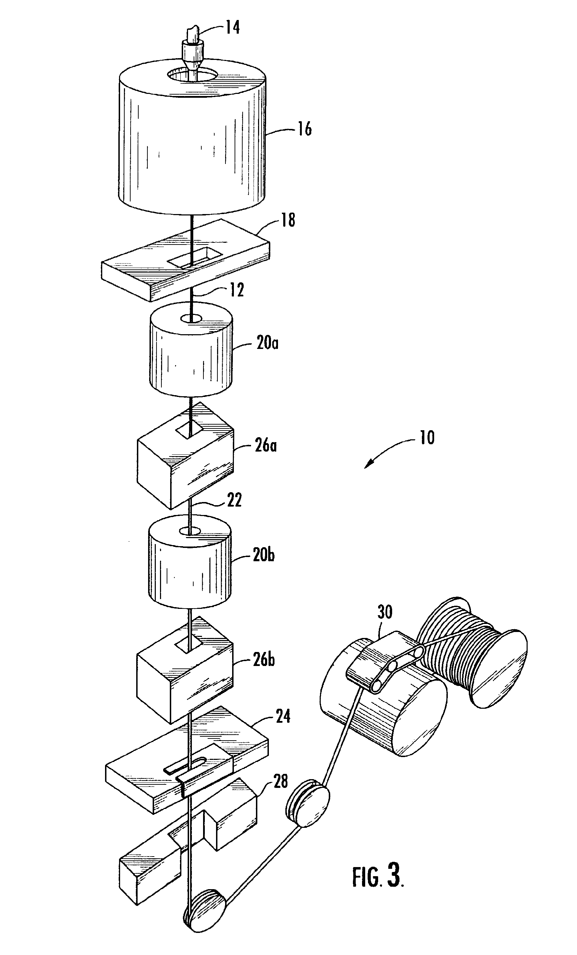

Fig. 1 illustrates a wet on wet manufacturing process, where the primary and secondary coating material is applied by the apparatus **20** prior to the curing stage **26.** The coating method of the present invention may also be used in a "wet on dry" manufacturing process. FIG. 3 represents an exemplary wet on dry process. In this process their is a first coating system **20a** and curing stage **26a** for applying and curing a primary layer and a second coating system **20b** and curing stage **26a** located after the first coating system and curing stage for applying and curing a secondary layer. In this embodiment, the coating method of the present invention applies the primary coating material to the optical fiber **12** and then exposes it to at least one radiant energy curing stage **26** before the secondary coating material is applied and also exposed to radiant energy, thus involving at least two stages of exposure. The POD of an optical fiber coated with only the primary coating material, whether such coating material contains a colorant or not, may be measured either optically or mechanically after the application and curing of the primary coating material in a wet on dry process. For example, a measurement gauge **24** may be placed at a point A between the first coating system **20a** and curing stage **26a** for applying the primary layer and a second coating system **20b** and curing stage **26b** for applying the secondary layer. The SOD may then be measured after the application of the secondary coating material and its curing either optically or mechanically with a measurement gauge **24.**

Further, as illustrated in FIG. 3, the POD of an optical fiber manufactured according to the coating methods of the present invention can be measured after both the primary coating material and the secondary coating material have been applied, if the primary coating material contains a colorant and the secondary coating material is substantially transparent. The SOD may then be measured either optically or mechanically. In this instance, the measurement gauge **24** can be used to measure both POD and SOD after the layers have been applied. Although the measurement gauge **24** is illustrated after second curing stage **26b**, it is understood that it can be placed before the curing stage 26b and measure the POD and SOD prior to curing of the secondary layer.

Importantly, the coating system of the present invention may be implemented in the apparatus 20. The coating system allows the POD and SOD of an optical fiber to be measured during the manufacturing process to provide an input to the manufacturing control system to adjust the speed of the manufacturing line 10 or other production variables so that both the primary coating material and the secondary coating material may be applied in a substantially uniform manner about the optical fiber **12.**

As mentioned, the POD and SOD of optical fiber manufactured in accordance with the present invention can be measured by conventional gauge measurement devices **24.** In some instances, these measurement devices are optical measurement devices that subject the coated optical fiber to light and generate a shadow or image of the coatings. Based on these generated shadows or images, the measurement device can determine POD and SOD values.

As mentioned, the coating system of the present invention applies first and second coatings to the optical fiber. The coatings used affect the performance of the optical fiber. The coated optical fiber **22** must meet certain desired performance characteristics. For example, the coated fiber **22** must have excellent transmission characteristics. It must remain intact although subjected to handling and the environment, it must be capable of being connected to other coated optical fibers or to devices and it must be capable of being tested. Further, the primary coating material, after curing, must have suitable resistance to microbending, suitable resistance to low temperatures, and suitable mechanical strength. The secondary coating material, after curing, also must have suitable resistance to microbending, adequate abrasion and cut-through resistance, and must not cause the force required to remove the coating system from the fiber to be too high. Coating materials influence fiber loss by the mechanism of microbending. Coating materials buffer the glass fiber from outside bending forces and without the coating materials, the glass cannot be handled.

Preferable characteristics for the selection of primary and secondary coating materials are disclosed in U.S. Patent No. 5,104,433 which issued on April 14, 1992, in the name of Chapin et al. (the "'433 patent"), and which is incorporated by reference hereinto. Selection criteria include consideration of the primary layer-optical fiber interface, the primary coating material, the secondary coating, and the secondary surface. Characteristics to be considered for the primary layer-optical fiber interface include strength/loss and strippability. Characteristics to be considered for the primary coating material include microbend resistance, low-temperature microbend resistance, and mechanical strength. Characteristics to be considered for the secondary coating material include microbend resistance, abrasion/cut-through resistance, strip force, and coating to glass delamination. Finally, characteristics to be considered for the secondary surface include handling/blocking characteristics and buffering. Additional information about these characteristics, as well as range values for these characteristics that will result in a well-constructed coated optical fiber, may be found in the '433 patent.

A primary coating material according to the present invention is formed by a combination of a polymeric base material with a non-reactive colorant. The primary coating material may also have one or more added photo-initiators so that it will react with certain forms of radiant energy and cure (harden) the material. This is different from primary coating materials currently manufactured by others. For example, one company uses a primary coating material that is clear or non-opaque. This primary coating material, however, contains a reactive colorant that reacts with radiant energy both to cure the material and to produce a color in the material. Generally, this radiant energy for both curing the material and creating the color is in the form of ultraviolet light, though other forms such as, for example, thermal energy or E-beam curing, may be utilized.

Preferably, in an embodiment of the present invention, the colorant is non-reactive, meaning that it is not of a type that is reactive to radiant energy in order to produce its color. Such a primary coating material with non-reactive colorant is formed by combining a polymeric base material with a colorant that is pigment-based, soluble dye based, or based upon any other non-reactive colorant composition or compound such that when combined with the polymeric base the primary coating material exhibits acceptable resistance to microbending and mechanical strength. Primary coating materials with non-reactive colorant may contain one or more photo-initiators that react with certain forms of radiant energy to cure the material. Generally, primary coating materials with non-reactive colorant are cured by exposure to ultraviolet light, though other forms of radiant energy may be used as well.

The secondary coating material in an embodiment of the invention is also a polymeric-based material. In an embodiment of the invention, for example, the secondary coating material as well as the secondary layer **36** it forms upon curing is substantially transparent or non-opaque such that it will allow radiation to pass through it for curing of the primary coating material and to allow optical measurement of the POD. The secondary coating material may have added photo-initiators to facilitate its curing. Generally, secondary coating materials are cured by exposure to ultraviolet light, though other forms of radiant energy may be used as well. E-beam curing may also be used, in which case the secondary coating material is cured using an electronic beam and therefore does not require a photo-initiator. Secondary coating materials may be commercially available from, for example, Borden Chemical, Inc., Dainippon Ink, and Chemicals, Inc., DSM Desotech, Inc., and JSR Corporation.

As shown in FIG. 2, a coated optical fiber according to the present invention having a primary layer **34** comprised of a colored primary coating material may be formed. This coated optical fiber will have, for example, a core of glass **12,** plastic or any other suitable material capable of transmitting an optical signal. The core **12** may, or may not, have one or more cladding layers (not shown in FIG. 2) surrounding it that are comprised of glass, plastic or any other suitable material capable of transmitting an optical signal. The core **12** and the cladding (if applicable) will then be surrounded by a colored primary layer **34.** The primary layer **34** is comprised of a polymeric based material containing a non-reactive colorant that colors the primary coating independent of exposure to radiant energy. The non-reactive colorant may be a pigment, soluble dye, a combination of pigment and soluble dye, or any other non-reactive colorant composition or compound. The primary coating may also include photo-initiators that react with certain forms of radiant energy to facilitate curing. The color of the primary layer **34** is used for identification of a single optical fiber. The composition of the primary coating material is such that it exhibits suitable characteristics for microbend resistance (over an acceptable temperature range) and mechanical strength to protect the optical fiber. Such primary coating material may be, for example, ultraviolet curable developmental materials 2d1-157 (red) or 2d1-158 (blue), or others, as such ultraviolet curable coatings are developed. Further, E-beam curing could be used by subjecting the coatings to an electronic beam, in which case, the coating material would not require a photo-initiator.

The non-reactive pigment and dyes used in coloring the primary layer can be of any composition sufficient to color the primary coating material. In general, the colorant systems should be compatible with the organic polymer constituting the colored coating system, and not produce any deleterious interactions, which might compromise the integrity or protective nature of the coating system.

The secondary coating material is a radiation-curable material that forms a secondary layer **36** that surrounds the colored primary layer **34**. The secondary coating material is also polymeric and may contain photo-initiators that react with certain forms of radiant energy to facilitate curing of the material. In an embodiment of the invention, for example, the secondary coating material is substantially transparent or non-opaque upon curing. Used in this context, substantially transparent or non-opaque means that the colored primary layer **34** is visible through the secondary layer **36** of the coated optical fiber **22** such that the coated optical fiber **22** may be identified by the color of the colored primary layer **34.** The composition of the secondary coating material is such that it exhibits suitable characteristics for microbend resistance (over an acceptable temperature range), abrasion/cut-through resistance, strip force, and coating to glass delamination. Such secondary coating material may be, for example, Borden 9MKU72575 ultraviolet curable coating material that may be commercially available from Borden Chemical, Inc., or DSM 3471-2-136 TM ultraviolet curable coating material that may be commercially available from DSM Desotech, Inc., among others. Alternatively, the coating material may be cured using E-beam technology, which does not require use of a photo-initiator in the coating material.

The coated optical fiber **22** may be used alone or as part of a cable or ribbon that may contain other optical fibers and/or conductors, or for any other application where a coated optical fiber may be utilized.

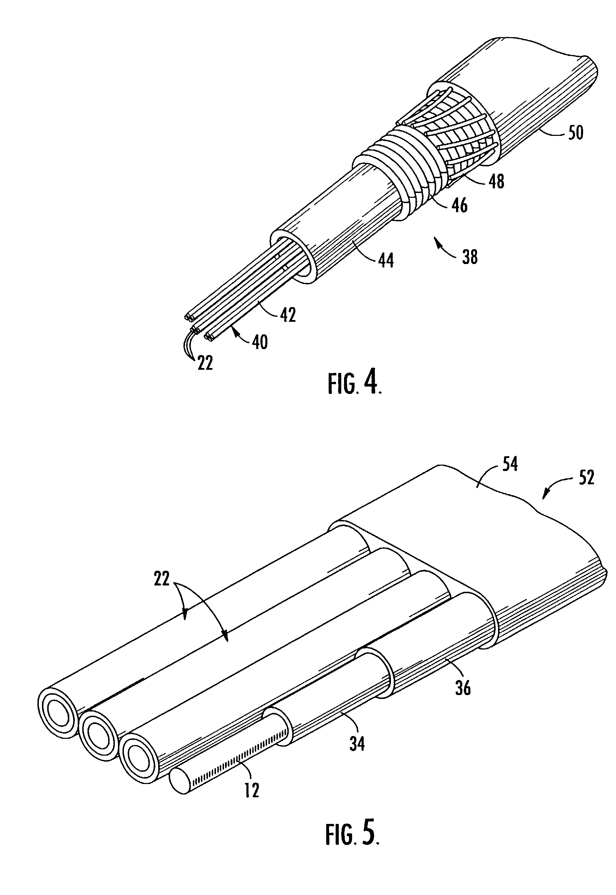

FIG. 4 is an exemplary embodiment of an optical fiber cable **38** employing one or a plurality of coated optical fibers **22** having colored primary layers. As seen in the exemplary embodiment of FIG. 4, the cable **38** includes a plurality of units **40** of coated optical fibers **22,** each unit held together by a binder **42.** The units **42** are enclosed in a core tube **44,** which is made of a suitable plastic material. About the core tube **44** may be disposed a metallic shield **46** and a strength member system **48.** The strength member system **48** may include a plurality of longitudinally extending strength members. Enclosing the strength member system **48** and shield **46** is a plastic jacket **50**. Individual coated optical fibers **22** may be readily identified by the coloring of the primary layer **34** for splicing, connectorization, and any other reason requiring identification of a specific optical fiber. FIG. 4 is exemplary only and represents one embodiment of a multitude of optical fiber cables that may utilize a coated optical fiber having a colored primary layer.

FIG. 5 is an exemplary embodiment of an optical fiber ribbon **52** employing one or a plurality of coated optical fibers **22** with each coated optical fiber **22** having a colored primary layer **34** and a substantially transparent or non-opaque secondary layer **36.** There is shown a perspective view of an optical fiber ribbon **52** showing a group of coated optical fibers **22** that are held together with an ultraviolet-curable matrix bonding material **54.** While the group of optical fibers shown in FIG. 5 are disposed in a coplanar parallel array, and while only four fibers are shown, such arrays may be organized in differing arrangements such as, for example, stacked, circular, etc., and such arrays may comprise more or fewer individual fibers. Individual coated optical fibers **22** may be readily identified by the coloring of the primary layer **34** for splicing, connectorization, and any other reason requiring identification of a specific optical fiber. FIG. 5 is exemplary only and represents one embodiment of a multitude of optical fiber ribbons that may utilize a coated optical fiber **22** having a colored primary layer **34**.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A primary layer coating material for coating an optical fiber comprised of:
a polymeric base; and
a non-reactive colorant,
wherein the primary coating layer is cured by exposure to radiant energy.

2. The primary layer of claim 1, wherein said non-reactive colorant is selected from the group consisting of pigment-based, soluble dye-based, and a combination of pigment and soluble dye-based colorants.

3. The primary layer of claim 1, further comprising a photo-initiator for curing the primary layer, and wherein said primary layer coating material is cured with an ultraviolet light.

4. The primary layer of claim 1, wherein said primary layer coating material is cured using E-beam technology.

5. A primary layer coating material for coating an optical fiber comprised of:
a polymeric base; and
a colorant that is non-reactive and alters the color of said polymeric base independent of exposure to radiant energy.

6. A coated optical fiber comprising:
a colored primary layer applied about a circumference of said optical fiber, said primary layer containing a non-reactive colorant; and
a secondary layer applied about a circumference of said colored primary layer.

7. The coated optical fiber of claim 6, wherein the non-reactive colorant of said primary layer is selected from the group consisting of pigment-based, soluble dye-based, and a combination of pigment and soluble dye-based colorants.

8. The coated optical fiber of claim 6, wherein said secondary layer is formed from a substantially transparent polymeric material, such that said colored primary layer is visible.

9. The coated optical fiber of claim 6, wherein said primary layer and secondary layer are cured by simultaneous exposure to radiant energy.

10. The coated optical fiber of claim 6, wherein said primary layer and said secondary layer each contain a photo-initiator and are cured with ultraviolet light.

11. The coated optical fiber of claim 6, wherein said primary layer and said secondary layer are cured by E-beam technology.

12. A coated optical fiber comprising:
a colored primary layer applied about a circumference of said optical fiber, said primary layer containing a non-reactive colorant; and
a secondary layer applied about a circumference of said colored primary layer,
wherein the non-reactive colorant of said colored primary layer alters the color of said primary layer independent of exposure to radiant energy.

13. A method of manufacturing a coated optical fiber, comprising the steps of:
applying a primary coating material to a circumference of an optical fiber to form a colored primary layer, said primary coating material comprising a polymeric base and a non-reactive colorant;
applying a secondary coating material over the primary coating material; and
exposing the primary coating material and the secondary coating material to radiant energy in order to cure the materials and form a colored primary layer and a secondary layer.

14. The method of claim 13, wherein said applying a secondary coating material step comprises applying a substantially transparent polymeric material over the primary coating material, such that the primary coating material is visible.

15. The method of claim 13, wherein said step of applying a primary coating material comprises applying a primary coating material having a colorant selected from the group consisting of pigment based, soluble dye-based, and a combination of pigment and soluble dye-based colorants.

16. The method of claim 13, wherein said exposing step exposes the primary coating material and the secondary coating material simultaneously to radiant energy.

17. The method of claim 13, wherein said applying steps respectively apply primary and secondary coating materials containing a photo-initiator, and wherein said exposing step exposes the primary and secondary coating materials to ultraviolet light.

18. The method of claim 13, wherein said exposing step exposes the primary and secondary coating materials to an electron beam to thereby cure the coatings.

19. The method of claim 13, wherein said exposing step exposes the primary coating material to radiant energy prior to application of the secondary coating material.

20. A method of manufacturing a coated optical fiber, comprising the steps of:
applying a primary coating material to a circumference of an optical fiber to form a colored primary layer, said primary coating material comprising a polymeric base and a non-reactive colorant, wherein the non-reactive colorant alters the color of said primary layer independent of exposure to radiant energy;
applying a secondary coating material over the primary coating material; and
exposing the primary coating material and the secondary coating material to radiant energy in order to cure the materials and form a colored primary layer and a secondary layer.

21. A method for measuring at least one of an outer diameter and a thickness of a primary coating layer of a coated optical fiber, comprising the steps of:
forming the coated optical fiber by applying a colored primary layer having an non-reactive colorant and a transparent secondary layer to an optical fiber;
directing a light source at the coated optical fiber, wherein light from said light source propagates through the transparent secondary layer and to the colored primary layer; and
determining the outer diameter of the colored primary layer from affects of the light by the colored primary layer.

22. The method of claim 21, wherein said forming step forms the colored primary layer by adding a non-reactive colorant to a primary coating material.

23. The method of claim 21, wherein said forming step adds a non-reactive colorant to a primary coating material selected from the group consisting of pigment-based, soluble dye-based, and a combination of pigment and soluble dye-based colorants.
